# EUROPEAN PATENT SPECIFICATION

(11) **EP 2 105 424 B1**
(45) Date of publication and mention of the grant of the patent: **26.09.2012**
(21) Application number: 08167809.6
(22) Date of filing: 29.10.2008
(51) Int. Cl.: C04B 37/00, C04B 35/634, C04B 38/00, C04B 35/565

(54) **Method for manufacturing a honeycomb structured body**
Verfahren zur Herstellung eines Körpers mit Wabenstruktur
Procédé de fabrication d'un élément structuré en nid d'abeille

(30) Priority: 27.03.2008 WO PCT/JP2008/055937
(43) Date of publication of application: 30.09.2009
(73) Proprietor: Ibiden Co., Ltd., Ogaki-shi, Gifu 503-8604 (JP)
(72) Inventor: Saijo, Takamitsu, 2326, Dunavarsany (HU)
(74) Representative: HOFFMANN EITLE

(56) References cited:
- EP-A- 1 686 107
- EP-A- 1 769 837
- WO-A-03/024892
- WO-A-2006/007950
- JP-A- 10 167 854
- US-A- 4 769 348
- US-A- 4 818 732
- QIAN J-M ET AL: "Preparation of porous SiC ceramic with a woodlike microstructure by sol-gel and carbothermal reduction processing" JOURNAL OF THE EUROPEAN CERAMIC SOCIETY, ELSEVIER SCIENCE PUBLISHERS, BARKING, ESSEX, GB, vol. 24, no. 10-11, 1 September 2004 (2004-09-01), pages 3251-3259, XP004504433 ISSN: 0955-2219

## Description

### TECHNICAL FIELD

The present invention relates to a method for manufacturing a honeycomb structured body.

### BACKGROUND ART

Recently, particulate matter (hereinafter, simply referred to as "particulate" or "PM") contained in exhaust gases discharged from internal combustions of vehicles such as buses and trucks, construction machines, and the like have become problems as contaminants harmful to the environment and the human body.
For this reason, various honeycomb filters (honeycomb structured bodies) made of porous ceramics have been proposed as filters that can capture particulates in exhaust gases and purify the exhaust gases.

A honeycomb structured body comprising a porous silicon carbide sintered body is proposed as such a honeycomb structured body.
Moreover, as a method for manufacturing a honeycomb structured body comprising porous silicon carbide, Patent Document 1 discloses a method for manufacturing a porous silicon carbide honeycomb sintered body, comprising: the first step of adding a crystal growth aid as occasion demands to obtain a mixture, by using silicon carbide powder as the starting raw material; the second step of adding a binder for molding to the mixture, molding the mixture in a honeycomb shape, thereafter drying it into a dried product, and cutting and processing the dried product at a cutting velocity high enough to avoid a temperature rise equal to or higher than a predetermined temperature; and the third step of degreasing the dried product if necessary after the processing treatment, then decarbonizing it in an oxidizing atmosphere, and continuously sintering the resultant product at a temperature of 2000 to 2400°C in an inert gas atmosphere.
Patent Document 1: JP-A 3213850

WO 03/024892 A1 discloses a method for preparing a ceramic porous structure comprising a mix of: alpha silicon carbide primary particles, a silicon source other than an SiC compound, organic particles, and at least one organic binder, the method comprises forming a paste or fluid from the said mix and suitable liquid, forming the paste into a green body and drying it, subjecting said body to pyrolizing condition in a furnace, melting the silicon source and reacting it with the carbon binder or particles thus creating nano-fine beta-SiC, which is further converted to nano-fine alpha-SiC.

EP 1769 837 A1 discloses a method for manufacturing a honeycomb structured body, which comprises mixing silicon carbide raw powders and preparing ceramic powder raw materials and the resulting ceramic powder raw materials into a honeycomb pillar shape and firing it, wherein the silicon carbide raw powders comprise a first particle group having a particle size of 1.0 to 100 µm and a second particle group having a particle size of 0.1 to 1.0 µm.

WO 2006/007950 A1 discloses a method for producing a ceramic moulded body comprising a porous matrix, containing a silicon carbide powder, a silica powder, and an organic binder, the silicon carbide has a bi-modal particle size distribution with a coarse grain portion and a fine grain portion.

QIAN J-M ET AL: "Preparation of porous SiC ceramic with a woodlike microstructure by sol-gel and carbothermal reduction processing" J. Euro. Ceramic Soc., vol. 24, no. 10-11, 1 September 2004 (2004-09-01), pages 3251-3259, discloses a method for preparing a highly porous silicon carbide ceramic with a woodlike microstructure by carbothermal reduction reaction of charcoal/silica composites, which are fabricated by infiltrating silica sol into a porous biocarbon template from tilia amurensis wood using a vacuum/pressure infiltration process.

### DISCLOSURE OF THE INVENTION

### PROBLEMS TO BE SOLVED BY THE INVENTION

In the method for manufacturing a honeycomb structured body comprising a porous silicon carbide sintered body by using silicon carbide powder as the starting raw material, as disclosed in Patent Document 1, the step of carrying out a firing treatment at a high temperature of 2000 to 2400°C is required.
Therefore, the manufacturing method disclosed in Patent Document 1 disadvantageously needs a high-temperature firing furnace and also consumes significant amounts of electric power.

### MEANS FOR SOLVING THE PROBLEMS

Then, wholehearted investigation by the present investors has led to completion of a new method for manufacturing a honeycomb structured body based on technical ideas completely different from those of the method for manufacturing a honeycomb structured body disclosed in Patent Document 1.

A method for manufacturing a honeycomb structured body according to claim 1 comprises the steps of: molding a raw material composition for manufacturing silicon carbide to manufacture a pillar-shaped honeycomb molded body in which a large number of cells are longitudinally disposed in parallel with one another with a cell wall therebetween; thereafter, carrying out a degreasing treatment on the honeycomb molded body to manufacture a honeycomb degreased body; and furthermore, carrying out a firing treatment on the honeycomb degreased body to manufacture a honeycomb structured body comprising a porous silicon carbide sintered body; wherein the raw material composition for manufacturing silicon carbide comprises : a silica powder; and a carbon powder and/or a carbon source polymer, a content of the silica powder in the raw material composition is 25 to 70% by weight, a weight ratio of carbon to silica contained in said honeycomb decreased body is 0.4 to 1.5, and the firing treatment is carried out at 1700° to 2000°C.

In the firing treatment, the reaction of silica (SiO₂) and carbon (C) shown in the following reaction equation (1) proceeds to the right to thereby generate silicon carbide, and some carbon disappears as gas to thereby generate a porous silicon carbide sintered body.

S i O₂ + 3 C ⇄ S i C + 2 C O ↑ (1)

Since the reaction shown in the reaction equation (1) proceeds to the right at a temperature of 1700°C or higher, it is considered possible to lower a firing temperature and power consumption of a firing furnace in comparison with a conventional method for manufacturing a honeycomb structured body by using silicon carbide powder as the starting raw material.
Since silica is consumed in firing to once generate an SiO gas, the portions where SiO₂ has existed tend to be formed as cavities; thus, it is possible to manufacture a porous silicon carbide sintered body having open pores.

In the method for manufacturing a honeycomb structured body according to claim 1, a weight ratio of carbon to silica contained in the honeycomb degreased body is 0.4 to 1.5.
When the weight ratio of silica and carbon contained in the honeycomb degreased body is within the above-mentioned range, the reaction of silica and carbon is more likely to proceed surely in a firing treatment.

In the method for manufacturing a honeycomb structured body according to claim 2, the raw material composition for manufacturing silicon carbide comprises a binder.
When the raw material composition for manufacturing silicon carbide comprises a binder, it is easier to manufacture a honeycomb molded body having the desired shape upon molding a raw material composition for manufacturing silicon carbide to manufacture a honeycomb molded body.

In the method for manufacturing a honeycomb structured body according to claim 3, the raw material composition for manufacturing silicon carbide comprises a pore-forming agent.
By using a raw material composition for manufacturing silicon carbide in which a pore-forming agent is contained, the desired pores are surely formed in the manufactured honeycomb structured body.

In the method for manufacturing a honeycomb structured body according to claim 4, the silica powder has an average particle diameter of 10 to 500 µm.
When the silica powder has an average particle diameter of 10 to 500 µm, since a raw material composition for manufacturing silicon carbide having a relatively high density is manufactured, a porous silicon carbide sintered body to be obtained does not exhibit too low a density; thus, it is possible to obtain a honeycomb structured body having the desired porosity and pore diameter and securing sufficient strength.
In contrast, when the silica powder has an average particle diameter of less than 10 µm, since the silica is bulky, it is hard to manufacture a molded body having a handleable mechanical property; and when the silica powder has an average particle diameter exceeding 500 µm, the reaction of silica (SiO₂) and carbon (C) tends not to proceed, likely leading to insufficient strength.

In the method for manufacturing a honeycomb structured body according to claim 5, a silica fine powder and a silica coarse powder that have different average particle diameters are contained as the silica powder in the raw material composition for manufacturing silicon carbide.
In the method for manufacturing a honeycomb structured body according to claim 6, the silica fine powder has an average particle diameter of 0.1 to 5 µm, and the silica coarse powder has an average particle diameter of 10 to 500 µm.
Since the silica fine powder and the silica coarse powder that have different average particle diameters are contained as the silica powder in the method for manufacturing a honeycomb structured body according to claims 5 and 6, the blended state of carbon powder and silica powder is favorable, and the manufactured honeycomb structured body has the desired porosity and pore diameter and secures sufficient strength.

In the method for manufacturing a honeycomb structured body according to claim 7, the raw material composition for manufacturing silicon carbide comprises at least a carbon powder, and the carbon powder has an average particle diameter of 1 to 40 µm.

In the method for manufacturing a honeycomb structured body according to claim 7, since the carbon powder has an average particle diameter of 1 to 40 µm, it is possible to prepare a relatively dense raw material composition for manufacturing silicon carbide. The resulting increase in contact area between silica (SiO₂) and carbon (C) causes the reaction therebetween to proceed more certainly, and the manufactured honeycomb structured body has a suitable pore diameter and a high strength.
In contrast, when the carbon powder has an average particle diameter of less than 1 µm, a pore diameter thereof may not be large enough; and when the average particle diameter exceeds 40 µm, silica particles are less likely to contact carbon powder, then the reaction between the two tends not to proceed, and sufficient strength tends not to be secured in the manufactured honeycomb structured body.

In the method for manufacturing a honeycomb structured body according to claim 1, the firing treatment is carried out at 1700 to 2000°C.
Even when a firing treatment is conducted at 1700 to 2000°C in the method for manufacturing a honeycomb structured body according to claim 1, the reaction of silica (SiO₂) and carbon (C) surely proceeds, the power consumption in a firing furnace can be lowered not to mention the fact that the sintered body of silicon carbide is manufactured.

In the method for manufacturing a honeycomb structured body according to claim 8, the raw material composition for manufacturing silicon carbide comprises at least a carbon source polymer, and the carbon source polymer comprises at least one of a phenol resin, an ethylene-vinyl acetate copolymer resin, a styrene-butadiene copolymer resin, an acrylonitrile resin, a styrene resin, a polyethylene, a furan resin, a polyimide resin, and a vinyl chloride resin.
By using these resins as a carbon source polymer, carbon remains in a raw material composition even after a degreasing process, and carbon can be certainly supplied into the honeycomb degreased body.

In the method for manufacturing a honeycomb structured body according to claim 9, the honeycomb structured body is formed by one porous silicon carbide sintered body, or the honeycomb structured body is formed by combining a plurality of the porous silicon carbide sintered bodies with one another by interposing an adhesive layer.

### BEST MODE FOR CARRYING OUT THE INVENTION

A method for manufacturing a honeycomb structured body according to the present invention comprises the steps of: molding a raw material composition for manufacturing silicon carbide to manufacture a pillar-shaped honeycomb molded body in which a large number of cells are longitudinally disposed in parallel with one another with a cell wall therebetween; thereafter, carrying out a degreasing treatment on the honeycomb molded body to manufacture a honeycomb degreased body; and furthermore, carrying out a firing treatment on the honeycomb degreased body to manufacture a honeycomb structured body comprising a porous silicon carbide sintered body;
wherein the raw material composition for manufacturing silicon carbide comprises : a silica powder; and a carbon powder and/or a carbon source polymer, a content of the silica powder in the raw material composition is 25 to 70% by weight, a weight ratio of carbon to silica contained in said honeycomb decreased body is 0.4 to 1.5, and the firing treatment is carried out at 1700° to 2000°C.

### (First Embodiment)

In a method for manufacturing a honeycomb structured body according to the embodiment, a raw material composition for manufacturing silicon carbide is first molded to manufacture a pillar-shaped honeycomb molded body in which a large number of cells are longitudinally disposed in parallel with one another with a cell wall therebetween. The raw material composition for manufacturing silicon carbide comprises: a silica powder; and a carbon powder and/or a carbon source polymer, the silica powder is contained in the raw material at 25 to 70% by weight.

The silica powder is not particularly limited, and examples thereof include silica sand, silica gel, colloidal silica, white carbon, finely divided anhydrous silica, and the like.
The silica powder desirably has an overall average particle diameter of 10 to 500 µm. When the silica powder having the above-mentioned particle diameter is used, since a raw material composition for manufacturing silicon carbide having a relatively high density is manufactured, the porous silicon carbide sintered body to be obtained does not exhibit too low a density; thus, it is possible to obtain a honeycomb structured body having the desired porosity and pore diameter and securing sufficient strength.

When carbon powder reacts with silica powder, the reaction of the following equation (2) initially proceeds to the right, SiO having a relatively low boiling point and existing as gas at a reaction temperature is generated, and gasified SiO and carbon (C) become SiC as the reaction of the equation (3) proceeds to the right.

S i O ₂ + C ⇄ S i O + ↑ (2)

S i O + 2 C ⇄ S i C + C O ↑ (3)

Therefore, when carbon reacts with SiO, carbon may be grown as particles, thereby leading to a possible change in a pore diameter. The portions where silica powder has existed in the raw material composition for manufacturing silicon carbide tend to be formed as pores; conversely, it is possible to control the pore diameter to some extent by controlling the particle diameter of the silica powder.

In the method for manufacturing a honeycomb structured body according to the first embodiment, it is possible to manufacture a porous silicon carbide sintered body having an average pore diameter of 5 to 20 µm by using silica powder having an overall average particle diameter of 10 to 500 µm.

The carbon powder is not particularly limited, and examples thereof include activated carbon, acetylene black, carbon black, and the like.
The carbon source polymer is not particularly limited, and desirably at least one of a phenol resin, an ethylene-vinyl acetate copolymer resin, a styrene-butadiene copolymer resin, an acrylonitrile resin, a styrene resin, a polyethylene, a furan resin, a polyimide resin, and a vinyl chloride resin. The phenol resin may be a novolac-type or resol-type phenol resin.

The weight ratio of carbon to silica contained in a honeycomb degreased body is 0.4 to 1.5.
When the weight ratio of carbon to silica is less than 0.4, a little carbon quantity causes the unreacted silica to remain in the fired body and tends to result in a reduction in the strength of the fired body. On the other hand, when the weight ratio of carbon to silica exceeds 1.5, an excessive carbon amount causes carbon to remain in the fired body and tends to result in a reduction in the strength of the fired body.

The carbon contained in the honeycomb degreased body was used because heating is carried out in an oxygen-containing atmosphere in the degreasing process of the honeycomb molded body, some carbon powder is thereby dissolved and removed, and the amount of the carbon that is actually involved in the reaction is therefore set to the standard values. Accordingly, in order to contain carbon powder, it is necessary to determine the content of the carbon by estimating the dissolution and removal of some carbon powder.

Upon using the carbon powder, 90% of the carbon powder is presumed to remain even after degreasing. Basically, it is possible to adjust the residual amount of carbon by adjusting the oxygen concentration in the degreasing process.

When added to the raw material composition for manufacturing silicon carbide, the carbon source polymer is not carbon at first, but carbonized into carbon powder in the degreasing process. Therefore, heating is preliminarily performed on the same conditions as in degreasing, which is followed by, for example, making sure what % by weight of a predetermined amount of phenol resin becomes carbon powder; thereafter, a certain amount of phenol resin is added, so that the target amount of carbon remains after degreasing. In the case of phenol resin, 30 to 60% by weight of the original weight is expected to become carbon after degreasing.

In the present invention, the raw material composition for manufacturing silicon carbide comprises at least: a silica powder; and a carbon powder and/or a carbon source polymer, as described above. The carbon powder and/or the carbon source polymer are/is added by calculating: the silica powder; and a carbon powder and/or a carbon source polymer to have a predetermined ratio after degreasing.

The average particle diameter of the carbon powder contained in the raw material composition for manufacturing silicon carbide is desirably 1 to 40 µm, and more desirably 1 to 10 µm.
When the carbon powder has an average particle diameter of less than 1 µm, a pore diameter thereof may not be large enough; and when the average particle diameter exceeds 40 µm, silica particles are less likely to contact carbon powder, then the reaction between the two tends not to proceed, and sufficient strength tends not to be secured in the manufactured honeycomb structured body.

In the method for manufacturing a honeycomb structured body according to the first embodiment, it is desirable to add a binder in a raw material composition for manufacturing silicon carbide.
The binder in the raw material composition for manufacturing silicon carbide is not particularly limited, and examples thereof include methyl cellulose, carboxymethyl cellulose, hydroxyethyl cellulose, polyethylene glycol, and the like.

The dispersion medium as water may be added to the raw material composition for manufacturing silicon carbide, if needed. The dispersion medium is not particular limited, and examples thereof include alcohol such as methanol, an organic solvent such as benzene, water, and the like.
The dispersion medium is blended in an appropriate amount so that the viscosity of the mixed composition is set in a certain range.

Furthermore, a pore-forming agent such as balloons that are fine hollow spheres including oxide-based ceramics, spherical acrylic particles, and graphite may be added to the raw material composition for manufacturing silicon carbide, if necessary.

The balloon is not particularly limited, and examples thereof include alumina balloon, glass micro balloon, shirasu balloon, fly ash balloon (FA balloon), mullite balloon, and the like. Alumina balloon is desirable among these.

Furthermore, a molding aid may be added to the raw material composition for manufacturing silicon carbide.
The molding aid is not particularly limited, and examples thereof include ethylene glycol, dextrin, fatty acid soap, fatty acid, polyalcohol, and the like.

A content of the silica powder in the raw material composition for manufacturing silicon carbide is desirably 25 to 70% by weight. In the case where only a carbon powder, not a carbon source polymer, is contained in a raw material composition for manufacturing silicon carbide, the content thereof is desirably 20 to 60% by weight. In the case where a carbon powder and a carbon source polymer are contained together therein, it is necessary to add the two by converting the weight of the carbon powder to be substituted into the weight of the carbon source polymer.

Subsequently, the raw material composition for manufacturing silicon carbide having the above-mentioned composition is mixed by an attritor or the like, sufficiently kneaded by a kneader or the like, extrusion-molded by using a die or the like, cut into a predetermined length, and then dried, to manufacture a pillar-shaped honeycomb molded body in which a large number of cells are longitudinally disposed in parallel with one another with a cell wall therebetween.
The above-mentioned mixing, kneading, extrusion molding, cutting, drying, and the like can be carried out upon manufacturing a porous silicon carbide sintered body by employing conventional methods. Predetermined cells of the dried honeycomb molded body are filled with the plug material paste, and then undergo drying. Here, the plug material paste may have the same composition as or a different composition from the raw material composition for manufacturing silicon carbide. In addition, sealing may be performed after manufacturing a honeycomb structured body.

Subsequently, the dried honeycomb molded body undergoes a degreasing treatment to manufacture a honeycomb degreased body.
The degreasing of the honeycomb dried body is typically carried out by placing the honeycomb dried body on a degreasing jig, thereafter transporting it into a degreasing furnace, and heating it at 300 to 650°C in an oxygen-containing atmosphere. This leads to sublimation, dissolution and removal of most of the above binder and the like. The added carbon powder decreases in a predetermined amount, and a carbon source polymer converts to carbon at a predetermined rate.

Subsequently, the honeycomb degreased body is placed on a firing jig, heated and thereby fired at 1700 to 2000°C in the atmosphere of inert gas such as nitrogen or argon to generate silicon carbide powder by the reaction and simultaneously sinter the silicon carbide powder adequately, and thereby manufacturing a porous silicon carbide sintered body.
In the invention according to the present embodiment, since a porous silicon carbide sintered body is manufactured by firing a raw material composition for manufacturing silicon carbide which comprises: a silica powder; and a carbon powder and/or a carbon source polymer and reacting silica with carbon, it is possible to decrease a firing temperature in comparison with the case of using a silicon carbide powder as a raw material.

It is to be noted that the sequent processes from the degreasing process to the firing process is preferably performed while the honeycomb dried body is placed on a firing jig and remains placed thereon during the degreasing process and the firing process. This allows the degreasing process and the firing process to be effectively conducted, and can prevent the honeycomb dried body from being damaged when being placed on a different jig after the degreasing process or in some other occasions.

As thus described, a porous silicon carbide sintered body can be obtained by: molding a raw material composition for manufacturing silicon carbide to manufacture a pillar-shaped honeycomb molded body in which a large number of cells are longitudinally disposed in parallel with one another with a cell wall therebetween; thereafter, carrying out a degreasing treatment on the honeycomb molded body to manufacture a honeycomb degreased body; and furthermore, carrying out a firing treatment on the honeycomb degreased body.

Desirably, the obtained porous silicon carbide sintered body has an average pore diameter of 5 to 20 µm and has a porosity of 30 to 60%.
It is because the honeycomb structured body comprising a porous silicon carbide sintered body having such an average pore diameter and porosity can be appropriately employed as a honeycomb filter or a catalyst supporting carrier.
Here, the porosity and pore diameter can be measured through conventionally known methods, such as a measuring method using a mercury porosimeter, Archimedes method, and a measuring method using a scanning electron microscope (SEM) .

Next, an adhesive paste to form the adhesive layer is applied to each of the side faces of the manufactured porous silicon carbide sintered body with an even thickness to form an adhesive paste layer, and a process for successively laminating another porous silicon carbide sintered body on this adhesive paste layer is repeated to manufacture an aggregate of porous silicon carbide sintered bodies having a predetermined size.

Examples of the adhesive paste include a material including: an inorganic binder; an organic binder; and inorganic fibers and/or inorganic particles.
Examples of the inorganic binder include silica sol, alumina sol, and the like. These may be used independently or two or more kinds thereof may be used in combination. Silica sol is desirable among the inorganic binders.

Examples of the organic binder include polyvinyl alcohol, methyl cellulose, ethyl cellulose, carboxymethyl cellulose, and the like. These may be used independently or two or more kinds thereof may be used in combination. Carboxymethyl cellulose is desirable among the organic binders.

Examples of the inorganic fibers include: ceramic fibers comprising silica-alumina, mullite, alumina, and silica; and the like. These may be used independently or two or more kinds thereof may be used in combination. Alumina fibers are desirable among the inorganic fibers.

Examples of the inorganic particles include carbides, nitrides, and the like, and specific examples thereof include: inorganic powder comprising silicon carbide, silicon nitride and boron nitride; and the like. These may be used independently or two or more kinds thereof may be used in combination. Of the inorganic particles, silicon carbide made of the same material as that of a porous silicon carbide sintered body is desirably used due to its superior thermal conductivity.

Furthermore, a pore-forming agent such as balloons that are fine hollow spheres including oxide-based ceramics, spherical acrylic particles, and graphite may be added to the adhesive paste, if necessary.
The balloon is not particularly limited, and examples thereof include alumina balloon, glass micro balloon, shirasu balloon, fly ash balloon (FA balloon), mullite balloon, and the like. Alumina balloon is desirable among these.

Next, the aggregate of porous silicon carbide sintered bodies is heated so that the adhesive paste layer is dried and solidified to form the adhesive layer.
Moreover, the aggregate of porous silicon carbide sintered bodies in which a plurality of the porous silicon carbide sintered bodies are bonded to one another with an adhesive layer therebetween undergoes a cutting process by using a diamond cutter or the like to manufacture a ceramic block having a round pillar shape.

By forming a sealing material layer around the periphery of the ceramic block by using the sealing material paste, there can be manufactured a honeycomb structured body, in which the sealing material layer is formed around the peripheral portion of the round pillar-shaped ceramic block formed by bonding a plurality of the porous silicon carbide sintered bodies to one another by interposing an adhesive layer.
Here, the honeycomb structured body may be formed by one porous silicon carbide sintered body instead of bonding a plurality of the porous silicon carbide sintered bodies to one another.

Thereafter, a catalyst is supported on the honeycomb structured body on demand. The above-mentioned supporting process of the catalyst may be carried out on the silicon carbide sintered bodies prior to being formed into an aggregate.
In the case where a catalyst is supported thereon, an alumina film (layer) having a high specific surface area is desirably formed on the surface of the honeycomb structured body, and a co-catalyst and a catalyst such as platinum are applied to the surface of the alumina film.

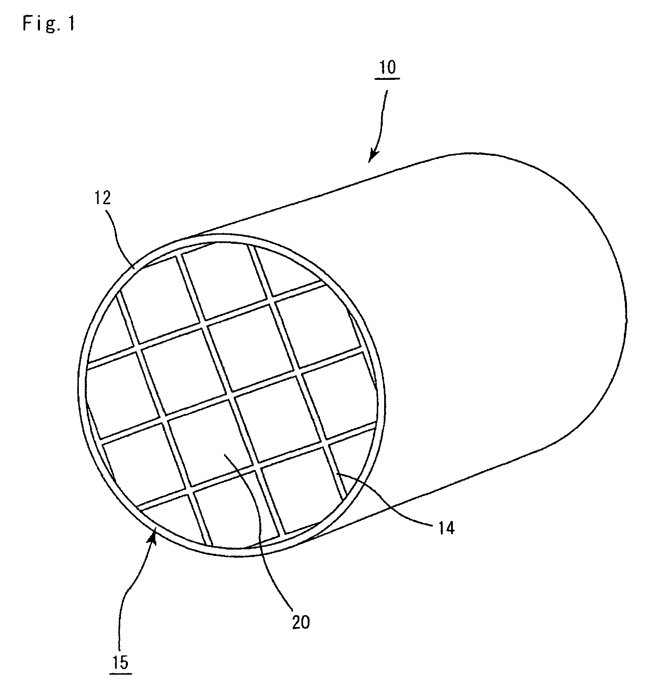

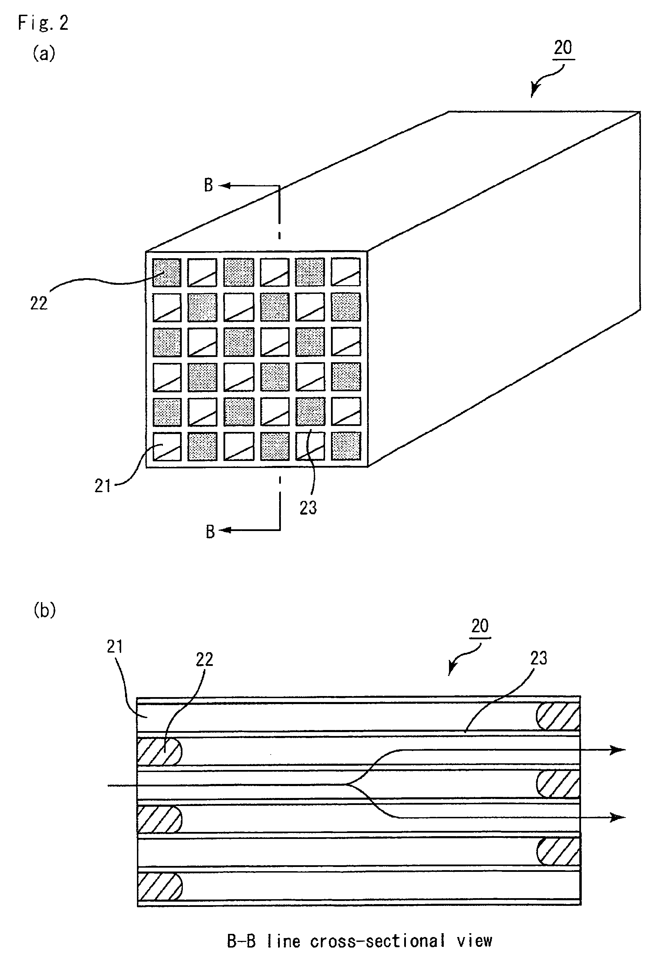

Fig. 1 is a perspective view schematically illustrating one example of a honeycomb structured body according to the present invention having the above-mentioned structure. Fig. 2 (a) is a perspective view schematically illustrating one example of a porous silicon carbide sintered body that configures the honeycomb structured body shown in Fig. 1, and Fig. 2(b) is a B-B line cross-sectional view of Fig. 2(a).

As illustrated in Fig. 1, a plurality of porous silicon carbide sintered bodies 20 are combined with one another by interposing adhesive layers 14, so that a honeycomb structured body 10 configures a ceramic block 15; and a sealing material layer 12 is formed around the periphery of this ceramic block 15.

As illustrated in Figs. 2 (a) and 2 (b), the porous silicon carbide sintered body 20 has a structure in which a plurality of cells 21 are longitudinally disposed in parallel with one another and cell walls 23 that separates the cells 21 are allowed to function as filters. In other words, each of the cells 21 formed in the porous silicon carbide sintered body 20 has either one of the end portions on the inlet side or the outlet side of exhaust gases sealed with a plug 22 as illustrated in Fig. 2 (b) so that exhaust gases that have flowed into one of the cells 21 are always allowed to flow out of another cell 21 after having passed through the cell wall 23 that separates the cells 21.
The shape of the honeycomb structured body to be manufactured in the present invention is not limited to a round pillar shape, and, for example, it may be a cylindroid shape, a polygonal shape, or any other desired shape.

A cell wall thickness of the honeycomb structured body is not particularly limited, and desirably 0.2 to 0.4 mm.
When the cell wall thickness is less than 0.2 mm, the cell wall which supports the honeycomb structure is so thin that it may not be able to hold the strength of the honeycomb structured body; whereas the thickness exceeding 0.4 mm may cause an increase in pressure loss.

The thickness of the outer wall (peripheral wall) that each of the honeycomb fired bodies configuring the honeycomb structured body has is not particularly limited, and is desirably 0.2 to 0.4 mm, the same thickness as that of a cell wall.

The cell density on a cross section perpendicular to the longitudinal direction of the honeycomb structured body is not particularly limited. However, a desirable lower limit is 31.0 pcs/cm² (200 pcs/in²) and a desirable upper limit is 93 pcs/cm² (600 pcs/in²). A more desirable lower limit is 38.8 pcs/cm² (250 pcs/in²) and a more desirable upper limit is 77.5 pcs/cm² (500 pcs/in²).

Hereinaf ter, the effects of the method for manufacturing a honeycomb structured body according to the present embodiment will be described.
(1) Since a silica powder; and a carbon powder and/or a carbon source polymer are used as raw materials (raw material compositions for manufacturing silicon carbide) in the method for manufacturing a honeycomb structured body according to the present embodiment, it is possible to manufacture a porous silicon carbide sintered body having a suitable porosity and an suitable average pore diameter even when a firing treatment is performed at a relatively low temperature of 1700 to 2000°C.
(2) In the method for manufacturing a honeycomb structured body according to the present embodiment, since the weight ratio of carbon to silica contained in the honeycomb degreased body is set in the range of 0.4 to 1.5, the reaction between silica and carbon tends to surely proceed in a firing treatment.
(3) In the method for manufacturing a honeycomb structured body according to the present embodiment, since the silica powder has the average particle diameter of 10 to 500 µm, a raw material composition for manufacturing silicon carbide having a relatively high density is manufactured, a porous silicon carbide sintered body to be obtained has a density that is not too low, has the desired porosity and pore diameter, and secures sufficient strength.
(4) In the method for manufacturing a honeycomb structured body according to the present embodiment, since the silica powder has an average particle diameter of 1 to 40 µm, it is possible to prepare a relatively dense raw material composition for manufacturing silicon carbide. The resulting increase in contact area between silica (SiO₂) and carbon (C) causes the reaction therebetween to proceed more certainly, and the manufactured honeycomb structured body has a suitable pore diameter and a high strength.
(5) In the method for manufacturing a honeycomb structured body according to the present embodiment, by using a carbon source polymer, carbon remains in a raw material composition even after a degreasing process, and can be certainly supplied into the honeycomb degreased body.
(6) In the method for manufacturing a honeycomb structured body according to the present embodiment, since a binder is contained in the raw material composition for manufacturing silicon carbide, it is easier to manufacture a honeycomb molded body of the desired shape upon manufacturing a honeycomb molded body by molding a raw material composition for manufacturing silicon carbide.

### EXAMPLES

The following will further describe the present invention by way of Examples, and the present invention is not limited to these Examples.

### (Example 1)

(1) First, 100 parts by weight of silica powder having an average particle diameter of 22 µm and 40 parts by weight of carbon powder having an average particle diameter of 3 µm were mixed, and to 140 parts by weight of the resulting mixture were added and kneaded 10 parts by weight of an organic binder (methyl cellulose) and 20 parts by weight of water to prepare a mixed composition (raw material composition for manufacturing silicon carbide).
Next, 10 parts by weight of a plasticizer (UNILUB, made by NOF Corporation) and 5 parts by weight of a lubricant (glycerin) were added to the mixed composition (raw material composition for manufacturing silicon carbide), then further kneaded, and thereafter extrusion-molded to manufacture a honeycomb raw molded body having the same rectangular pillar shape as illustrated in Fig. 2.

(2) The above-mentioned raw molded body was dried using a microwave drying apparatus or the like to manufacture a honeycomb dried body. Thereafter, 700 parts by weight of α-type silicon carbide powder having an average particle diameter of 22 µm and 300 parts by weight of α-type silicon carbide powder having an average particle diameter of 0.5 µm were mixed, and to 1000 parts by weight of the resulting mixture were added and kneaded 57 parts by weight of an organic binder (methyl cellulose) and 177 parts by weight of water to prepare a mixed composition. Next, after adding 33 parts by weight of a plasticizer (UNILUB, made by NOF Corporation) and 15 parts by weight of a lubricant (glycerin) to the mixed composition to form a plug material paste, predetermined cells of the honeycomb dried body were filled with the plug material paste.

(3) Next, after having been again dried by using a drying apparatus, the resulting products were degreased at 400°C, and fired at 1800°C in a normal-pressure argon atmosphere for 3 hours to manufacture a porous silicon carbide sintered body 20, which has a size of 34.3 mm × 34.3 mm × 150 mm, the number of cells 21 (cell density) of 28 pcs/cm², a thickness of substantially all the cell walls 23 of 0.30 mm.

(4) By using a heat-resistant adhesive paste containing 30% by weight of alumina fibers having an average fiber length of 20 µm, 21% by weight of silicon carbide particles having an average particle diameter of 0.6 µm, 15% by weight of silica sol (solids content: 30% by weight), 5.6% by weight of carboxymethyl cellulose, and 28.4% by weight of water, a large number of porous silicon carbide sintered bodies 20 were bonded to one another, and this was subsequently cut by using a diamond cutter to manufacture a round pillar-shaped ceramic block 15.

(5) Next, 23.3% by weight of alumina silicate fibers (average fiber length: 0.1 to 100 µm), 30.2% by weight of silicon carbide powder having an average particle diameter of 0.3 µm, 7% by weight of silica sol (solids content: 30% by weight), 0.5% by weight of carboxymethyl cellulose, and 39% by weight of water were mixed and kneaded to prepare a sealing material paste.

Next, a sealing material paste layer having a thickness of 0.2 mm was formed around the peripheral portion of the ceramic block 15 by using the sealing material paste. Further, this sealing material paste layer was dried at 120°C to manufacture a round pillar-shaped honeycomb structured body 10 having a size of 143.8 mm in diameter × 150 mm in length.
Table 1 shows the above-mentioned manufacturing conditions.

### (Comparative Example 1)

(1) First, 70 parts by weight of α-type silicon carbide powder having an average particle diameter of 11 µm and 30 parts by weight of α-type silicon carbide powder having an average particle diameter of 0.5 µm were mixed, and to 100 parts by weight of the resulting mixture were added and kneaded 10 parts by weight of acrylic particles having an average particle diameter of 40 µm, 5.7 parts by weight of an organic binder (methyl cellulose) and 26.6 parts by weight of water to prepare a mixed composition.
Next, after 2 parts by weight of a plasticizer (UNILUB, made by NOF Corporation) and 5 parts by weight of a lubricant (glycerin) were added to the mixed composition, then further kneaded, and thereafter extrusion-molded to manufacture a honeycomb raw molded body having the same rectangular pillar shape as illustrated in Fig. 2. Here, the acrylic particles were added as a pore-forming agent to form pores.

(2) After the above-mentioned raw molded body had been dried using a microwave drying apparatus or the like to form a honeycomb dried body, predetermined cells of the honeycomb dried body were filled with a plug material paste having the same composition as that of the raw molded body.
Next, after having been again dried by using a drying apparatus, the resulting products were degreased at 400°C, and fired at 2250°C in a normal-pressure argon atmosphere for 3 hours to manufacture a porous silicon carbide sintered body 20, which had a porosity of 60%, a size of 34.3 mm × 34.3 mm × 150 mm, the number of cells 21 (cell density) of 28 pcs/cm², a thickness of substantially all the cell walls 23 of 0.30 mm.

(3) By using a heat-resistant adhesive paste containing 30% by weight of alumina fibers having an average fiber length of 20 µm, 21% by weight of silicon carbide particles having an average particle diameter of 0.6 µm, 15% by weight of silica sol (solids content: 30% by weight), 5.6% by weight of carboxymethyl cellulose, and 28.4% by weight of water, a large number of porous silicon carbide sintered bodies 20 were bonded to one another, and this was cut by using a diamond cutter to manufacture a round pillar-shaped ceramic block 15.

(4) Next, 23.3% by weight of alumina silicate fibers (average fiber length: 0.1 to 100 µm), 30.2% by weight of silicon carbide powder having an average particle diameter of 0.3 µm, 7% by weight of silica sol (solids content: 30% by weight), 0.5% by weight of carboxymethyl cellulose, and 39% by weight of water were mixed and kneaded to prepare a sealing material paste.

Next, a sealing material paste layer having a thickness of 0.2 mm was formed around the peripheral portion of the ceramic block 15 by using the sealing material paste. Further, this sealing material paste layer was dried at 120°C to manufacture a round pillar-shaped aggregated honeycomb structured body 10 having a size of 143.8 mm in diameter × 150 mm in length.

### (Examples 2 to 9, Comparative Examples 2 and 3)

A honeycomb structured body 10 was manufactured in the same manner as in Example 1, except that, in the process of manufacturing a honeycomb raw molded body, a mixed composition (raw material composition for manufacturing silicon carbide) was formed by mixing the respective components as shown in Table 1 and a honeycomb raw molded body was manufactured by extrusion molding. Table 1 shows the manufacturing conditions.

### (Examples 10 and 11, Comparative Examples 4 and 5)

A porous silicon carbide sintered body 20 and then a honeycomb structured body were manufactured in the same manner as in Example 1, except that in (1), phenol resin, instead of carbon powder, was added in parts by weight shown in Table 1 and parts by weight of other components were adjusted so as to be the same values as shown in Table 1. Table 1 shows the manufacturing conditions.

| | Silica powder | | Carbon powder | | Carbon source polymer | | Methyl cellulose (parts by weight) | Water (parts by weight) | Plasticizer (parts by weight) | Lubricant (parts by weight) | Firing temperature (°C) 3 hours |
|---|---|---|---|---|---|---|---|---|---|---|---|
| | Average particle diameter (µm) | Amount (parts by weight) | Average particle diameter (µm) | Amount (parts by weight) | Kind | Amount (parts by weight) | | | | | |
| Example 1 | 22 | 100 | 3.0 | 40 | NA | NA | 10 | 20 | 10 | 5 | 1800 |
| Example 2 | 22 | 100 | 3.0 | 90 | NA | NA | 13 | 25 | 12 | 6 | 1800 |
| Example 3 | 22 | 100 | 3.0 | 150 | NA | NA | 15 | 35 | 15 | 8 | 1800 |
| Example 4 | 10 | 100 | 3.0 | 90 | NA | NA | 9 | 18 | 10 | 5 | 1800 |
| Example 5 | 200 | 100 | 3.0 | 60 | NA | NA | 9 | 18 | 10 | 5 | 1800 |
| Example 6 | 500 | 100 | 3.0 | 60 | NA | NA | 9 | 18 | 10 | 5 | 1900 |
| Example 7 | 22 | 100 | 10.0 | 90 | NA | NA | 12 | 23 | 12 | 6 | 1800 |
| Example 8 | 22 | 100 | 40.0 | 90 | NA | NA | 12 | 23 | 12 | 6 | 1800 |
| Example 9 | 22 | 100 | 50.0 | 90 | NA | NA | 15 | 32 | 12 | 6 | 1800 |
| Example 10 | 22 | 100 | NA | NA | Phenol resin | 120 | 10 | 20 | 10 | 5 | 1800 |
| Example 11 | 200 | 100 | 30 | 60 | Phenol resin | 60 | 12 | 23 | 10 | 5 | 1800 |
| Comparative Example 1 | *1 11 | 70 | *2 0.5 | 30 | *3 10 | 10 | 5.7 | 26.6 | 2 | 5 | 2250 |
| Comparative Example 2 | 22 | 100 | 3.0 | 160 | NA | NA | 15 | 35 | 12 | 6 | 1800 |
| Comparative Example 3 | 22 | 100 | 3.0 | 30 | NA | NA | 10 | 20 | 10 | 5 | 1800 |
| Comparative Example 4 | 7 | 100 | NA | NA | Phenol resin | 120 | 10 | 20 | 10 | 5 | 1800 |
| Comparative Example 5 | 700 | 100 | 3.0 | 60 | Phenol resin | 60 | 10 | 20 | 10 | 5 | 1800 |

| | | | | | | | | | | | |
|---|---|---|---|---|---|---|---|---|---|---|---|
| NA = Nol Available Note: In Comparative Example 1. *1 denotes an α-type silicon carbide powder having an average particle diameter of 11 µm. 12 denotes an α-type silicon carbide powder having an average particle diameter of 0.5 µm, and *3 denotes acrylic particles having an average particle diameter of 40 µm. | | | | | | | | | | | |

### (Evaluation)

### (1) Measurements of average pore diameter

Each of the porous silicon carbide sintered bodies according to Examples and Comparative Examples was measured for the pore distribution of fine pores in a range of fine pore diameters of 0.1 to 360 µm by using a porosimeter (AutoPore III 9420, manufactured by Shimadzu Corp.) through a mercury porosimetry. Table 2 shows the results.

### (2) Measurements of average porosity

Each of the porous silicon carbide sintered bodies according to Examples and Comparative Examples were measured for an average porosity through Archimedes method. Table 2 shows the results.

### (3) Measurements of pressure loss before and after capturing particulates

Each of the honeycomb structured bodies according to Examples and Comparative Examples was placed in an exhaust passage of an engine to provide an exhaust gas purifying apparatus, and the engine was driven at the number of revolutions of 3000 min⁻¹ with a torque of 50 Nm for 100 minutes so that the relationship between the captured amount of particulates and pressure loss was measured. Table 2 shows data between the initial pressure loss and transient pressure loss (pressure loss upon capturing 8 g/L of particulates).

### (4) Measurements of base member strength

By using an Instron 5582, a three-point bending test was carried out under conditions of a span distance of 135 mm and a speed of 1 mm/min, so that the bending strength of each of the porous silicon carbide sintered bodies according to Examples and Comparative Examples was measured. Based upon the results of the measurements, the second moment of area was calculated, and the value was converted to a strength value of a base member without the cell structure and given as the base member strength. Table 2 shows the results.

**Table 2**

| | Average pore diameter (µm) | Average porosity (%) | Initial pressure loss (kPa) | Transient pressure loss (kPa) soot.8 g/L | Base material strength (MPa) |
|---|---|---|---|---|---|
| Example 1 | 12 | 42 | 4.0 | 8.0 | 47 |
| Example 2 | 11 | 41 | 4.9 | 9.1 | 45 |
| Example 3 | 7 | 39 | 5.3 | 10.7 | 35 |
| Example 4 | 10 | 38 | 4.1 | 8.4 | 42 |
| Example 5 | 17 | 45 | 2.5 | 5.1 | 37 |
| Example 6 | 20 | 49 | 2.1 | 4.8 | 25 |
| Example 7 | 8 | 38 | 5.9 | 12.1 | 40 |
| Example 8 | 5 | 39 | 4.6 | 9.7 | 34 |
| Example 9 | 5 | 38 | 5.3 | 11.3 | 22 |
| Example 10 | 11 | 43 | 4.2 | 8.1 | 43 |
| Example 11 | 13 | 44 | 3.7 | 7.5 | 39 |
| Comparative Example 1 | 6 | 41 | 5.8 | 11.5 | 36 |
| Comparative Example 2 | 5 | 32 | 6.3 | 13.1 | 18 |
| Comparative Example 3 | 20 | 62 | 2.2 | 4.9 | 15 |
| Comparative Example 4 | 5 | 33 | 6.2 | 13.0 | 30 |
| Comparative Example 5 | 22 | 52 | 2.0 | 4.7 | 20 |

It has been proved in Table 2 that: each of the honeycomb structured bodies according to Examples 1 to 11 has substantially the same properties as those of the honeycomb structured body according to Comparative Example 1; and even in the case of using silica powder, carbon powder, etc. as raw materials to obtain a silicon carbide sintered body by the reaction thereof, it is possible to obtain a honeycomb structured body having the same properties as those in the case of conventionally used silicon carbide powder.
In the case of too much amount of carbon powder as in Comparative Example 2, the initial pressure loss and transient pressure loss became too high and the base member strength decreased; in contrast, in the case of too little amount of carbon powder as in Comparative Example 3, the base member strength decreased.
In the case where an average particle diameter of silica powder was too small as in Comparative Example 4, the initial pressure loss and transient pressure loss became too high; in contrast, in the case where an average particle diameter of silica powder was too large as in Comparative Example 5, the base member strength decreased.

### (Second Embodiment)

In the method for manufacturing a honeycomb structured body according to the second embodiment, silica fine powder and silica coarse powder that have different average particle diameters were contained instead of using one kind of silica powder as a raw material composition for manufacturing silicon carbide. That is, the silica fine powder desirably has an average particle diameter of 0.1 to 5 µm, and the silica coarse powder has an average particle diameter of 10 to 500 µm.
It is because the blended state of carbon powder and silica powder is favorable when the silica fine powder and the silica coarse powder are contained as thus described; thus, the manufactured honeycomb structured body has the desired porosity and pore diameter, and secures sufficient strength.

The silica powder is not particularly limited, and examples thereof include silica sand, silica gel, colloidal silica, white carbon, finely divided anhydrous silica, and the like.
The mixed weight ratio of silica fine powder having an average particle diameter of 0.1 to 5 µm to silica coarse powder having an average particle diameter of 10 to 500 µm (silica fine powder/silica coarse powder) is desirably 1/9 to 9/1.

Since the second embodiment is the same as the first embodiment except for the above, other descriptions will be omitted.

### (Examples 12 to 17)

A porous silicon carbide sintered body 20 and then a honeycomb structured body were manufactured in the same manner as in Example 1, except that in (1), silica coarse powder and silica fine powder, instead of 100 parts by weight of silica powder having the average particle diameter of 22 µm, were used in parts by weight shown in Table 3 and parts by weight of other components were adjusted so as to be the same values as shown in Table 3. Table 3 shows the manufacturing conditions.

| | Silica coarse powder | | Silica fine powder | | Carbon powder | | Methyl cellulose (parts by weight) | Water (parts by weight) | Plasticizer (parts by weight) | Lubricant (parts by weight) | Firing temperature (°C) 3 hours |
|---|---|---|---|---|---|---|---|---|---|---|---|
| | Average particle diameter (µm) | Amount (parts by weight) | Average particle diameter (µm) | Amount (parts by weight) | Average particle diameter (µm) | Amount (parts by weight) | | | | | |
| Example 12 | 50 | 30 | 3.0 | 70 | 3.0 | 90 | 10 | 20 | 10 | 5 | 1800 |
| Example 13 | 50 | 60 | 3.0 | 40 | 3.0 | 90 | 10 | 20 | 10 | 5 | 1800 |
| Example 14 | 50 | 80 | 3.0 | 20 | 3.0 | 90 | 10 | 20 | 10 | 5 | 1800 |
| Example 15 | 10 | 40 | 3.0 | 60 | 3.0 | 90 | 10 | 20 | 10 | 5 | 1800 |
| Example 16 | 200 | 40 | 3.0 | 60 | 3.0 | 90 | 10 | 20 | 10 | 5 | 1800 |
| Example 17 | 500 | 40 | 3.0 | 60 | 3.0 | 90 | 10 | 20 | 10 | 5 | 1800 |

### (Evaluation)

Measurements were made in the same manner as in Example 1, regarding average pore diameters, porosities, pressure loss before and after capturing particulates, and base member strength.

**Table 4**

| | Average pore diameter (µm) | Average porosity (%) | Initial pressure loss (kPa) | Transient pressure loss (kPa) soot.8 g/L | Base material strength (MPa) |
|---|---|---|---|---|---|
| Example 12 | 12 | 41 | 4.2 | 8.1 | 48 |
| Example 13 | 12 | 42 | 4.9 | 9.0 | 46 |
| Example 14 | 13 | 43 | 5.0 | 9.1 | 45 |
| Example 15 | 11 | 43 | 4.6 | 8.6 | 47 |
| Example 16 | 16 | 44 | 2.7 | 5.5 | 35 |
| Example 17 | 19 | 47 | 2.3 | 4.9 | 25 |

It has been proved in Table 4 that: each of the honeycomb structured bodies according to Examples has substantially the same properties as those of the honeycomb structured body according to Comparative Example 12 to 17; and even in the case of using silica coarse powder and silica fine powder, and carbon powder, etc. as raw materials to obtain a silicon carbide sintered body by the reaction thereof, it is possible to obtain a honeycomb structured body having the same properties as those in the case of conventionally used silicon carbide powder.
When the properties of the honeycomb structured bodies of Examples 11 to 15 in the case of using silica coarse powder and silica fine powder, and carbon powder, etc. as rawmaterials were compared with the properties of the honeycomb structured bodies of Examples 1 to 10 in the case of using silica powder and carbon powder each having a particle diameter of one kind, both properties did not exhibit any specific differences.

Also in the method for manufacturing a honeycomb structured body according to the present embodiment, the same effects (1), (2), (4), and (5) as in the honeycomb structured body according to the first embodiment can be exerted.

In the method for manufacturing a honeycomb structured body according to the present embodiment, silica fine powder and silica coarse powder were contained, the silica fine powder has an average particle diameter of 0.1 to 5 µm, and the silica coarse powder has an average particle diameter of 10 to 500 µm; therefore, the blended state of carbon powder and silica powder is favorable, and the manufactured honeycomb structured body has the desired porosity and pore diameter, and secures sufficient strength.

### BRIEF DESCRIPTION OF THE DRAWINGS

Fig. 1 is a perspective view schematically illustrating one example of a honeycomb structured body according to the present invention.
Fig. 2 (a) is a perspective view schematically illustrating one example of a porous silicon carbide sintered body that configures the honeycomb structured body shown in Fig. 1, and Fig. 2(b) is a B-B line cross-sectional view of Fig. 2(a).

### EXPLANATION OF SYMBOLS

- 10: Honeycomb structured body
- 11: Adhesive layer
- 12: Sealing material layer
- 15: Ceramic block
- 20: Porous silicon carbide sintered body
- 21: Cell
- 22: Plug material
- 23: Cell wall

## Claims

1. A method for manufacturing a honeycomb structured body, comprising the steps of:
molding a raw material composition for manufacturing silicon carbide to manufacture a pillar-shaped honeycomb molded body in which a large number of cells are longitudinally disposed in parallel with one another with a cell wall therebetween;
thereafter, carrying out a degreasing treatment on said honeycomb molded body to manufacture a honeycomb degreased body; and
furthermore, carrying out a firing treatment on said honeycomb degreased body to manufacture a honeycomb structured body comprising a porous silicon carbide sintered body;
wherein said raw material composition for manufacturing silicon carbide comprises: a silica powder; and a carbon powder and/or a carbon source polymer, a content of the silica powder in the raw material composition is 25 to 70% by weight, a weight ratio of carbon to silica contained in said honeycomb degreased body is 0.4 to 1.5, and said firing treatment is carried out at 1700 to 2000°C.

2. The method for manufacturing a honeycomb structured body according to claim 1,
wherein said raw material composition for manufacturing silicon carbide comprises a binder.

3. The method for manufacturing a honeycomb structured body according to any one of claim 1 or 2,
wherein said raw material composition for manufacturing silicon carbide comprises a pore-forming agent.

4. The method for manufacturing a honeycomb structured body according to any of claims 1 to 3,
wherein said silica powder has an average particle diameter of 10 to 500 µm.

5. The method for manufacturing a honeycomb structured body according to any of claims 1 to 3,
wherein a silica fine powder and a silica coarse powder that have different average particle diameters are contained as said silica powder in said raw material composition for manufacturing silicon carbide.

6. The method for manufacturing a honeycomb structured body according to claim 5,
wherein said silica fine powder has an average particle diameter of 0.1 to 5 µm, and said silica coarse powder has an average particle diameter of 10 to 500 µm.

7. The method for manufacturing a honeycomb structured body according to any of claims 1 to 6,
wherein said raw material composition for manufacturing silicon carbide comprises at least a carbon powder, and said carbon powder has an average particle diameter of 1 to 40 µm.

8. The method for manufacturing a honeycomb structured body according to any of claims 1 to 7,
wherein said raw material composition for manufacturing silicon carbide comprises at least a carbon source polymer, and said carbon source polymer comprises at least one of a phenol resin, an ethylene-vinyl acetate copolymer resin, a styrene-butadiene copolymer resin, an acrylonitrile resin, a styrene resin, a polyethylene, a furan resin, a polyimide resin, and a vinyl chloride resin.

9. The method for manufacturing a honeycomb structured body according to any of claims 1 to 8,
wherein said honeycomb structured body is formed by one porous silicon carbide sintered body, or said honeycomb structured body is formed by combining a plurality of said porous silicon carbide sintered bodies with one another by interposing an adhesive layer.

## Patentansprüche

1. Verfahren zur Herstellung eines Wabenstrukturkörpers, das die folgenden Schritte umfasst:
Formen einer Rohmaterialzusammensetzung zum Herstellen von Siliziumcarbid, um einen säulenförmigen Wabenformkörper herzustellen, in dem eine große Anzahl von Zellen zueinander parallel mit einer dazwischenliegenden Zellwand longitudinal angeordnet sind;
danach Durchführen einer Entgasungsbehandlung des Wabenformkörpers, um einen entgasten Wabenkörper herzustellen; und
weiterhin Durchführen einer Brennbehandlung mit dem entgasten Wabenkörper, um einen Wabenstrukturkörper herzustellen, der einen porösen Siliziumcarbid-Sinterkörper umfasst;
worin die Rohmaterialzusammensetzung zur Herstellung von Siliziumcarbid umfasst: ein Siliziumdioxidpulver; und ein Kohlenstoffpulver und/oder ein Kohlenstoffquellen-Polymer, wobei der Gehalt des Siliziumdioxidpulvers in der Rohmaterialzusammensetzung 25 bis 70 Gew.% ist, das Gewichtsverhältnis von im entgasten Wabenkörper enthaltenem Kohlenstoff zu Siliziumdioxid 0,4 bis 1,5 ist und die Brennbehandlung bei 1.700 bis 2.000°C durchgeführt wird.

2. Verfahren zur Herstellung eines Wabenstrukturkörpers gemäß Anspruch 1, worin die Rohmaterialzusammensetzung zur Herstellung von Siliziumcarbid ein Bindemittel umfasst.

3. Verfahren zur Herstellung eines Wabenstrukturkörpers gemäß irgendeinem der Ansprüche 1 oder 2, worin die Rohmaterialzusammensetzung zur Herstellung von Siliziumcarbid ein porenbildendes Mittel umfasst.

4. Verfahren zur Herstellung eines Wabenstrukturkörpers gemäß irgendeinem der Ansprüche 1 bis 3, worin das Siliziumdioxidpulver einen mittleren Teilchendurchmesser von 10 bis 500 µm hat.

5. Verfahren zur Herstellung eines Wabenstrukturkörpers gemäß irgendeinem der Ansprüche 1 bis 3, worin ein Siliziumdioxid-Feinpulver und ein Siliziumdioxid-Grobpulver mit unterschiedlichen mittleren Teilchendurchmessern als das Siliziumdioxidpulver in der Rohmaterialzusammensetzung zur Herstellung von Siliziumcarbid enthalten sind.

6. Verfahren zur Herstellung eines Wabenstrukturkörpers gemäß Anspruch 5, worin das Siliziumdioxid-Feinpulver einen mittleren Teilchendurchmesser von 0,1 bis 5 µm hat und das Siliziumdioxid-Grobpulver einen mittleren Teilchendurchmesser von 10 bis 500 µm hat.

7. Verfahren zur Herstellung eines Wabenstrukturkörpers gemäß irgendeinem der Ansprüche 1 bis 6, worin die Rohmaterialzusammensetzung zur Herstellung von Siliziumcarbid zumindest ein Kohlenstoffpulver umfasst, und das Kohlenstoffpulver einen mittleren Teilchendurchmesser von 1 bis 40 µm hat.

8. Verfahren zur Herstellung eines Wabenstrukturkörpers gemäß irgendeinem der Ansprüche 1 bis 7, worin die Rohmaterialzusammensetzung zur Herstellung von Siliziumcarbid mindestens ein Kohlenstoffquellen-Polymer umfasst, und das Kohlenstoffquellen-Polymer mindestens eines aus einem Phenolharz, einem Ethylen-Vinylacetat-Copolymerharz, einem Styrol-Butadien-Copolymerharz, einem Acrylnitrilharz, einem Styrolharz, einem Polyethylen, einem Furanharz, einem Polyimidharz und einem Vinylchloridharz umfasst.

9. Verfahren zur Herstellung eines Wabenstrukturkörpers gemäß irgendeinem der Ansprüche 1 bis 8, worin der Wabenstrukturkörper aus einem porösen Siliziumcarbid-Sinterkörper gebildet wird oder der Wabenstrukturkörper durch das miteinander Kombinieren einer Mehrzahl der porösen Siliziumcarbid-Sinterkörper mittels Einfügen einer Adhäsivschicht gebildet wird.

## Revendications

1. Procédé de fabrication d'un corps structuré en nid d'abeille, comprenant les étapes consistant à :
mouler une composition de matières premières destinée à la fabrication de carbure de silicium pour fabriquer un corps moulé en nid d'abeille en forme de pilier dans lequel un grand nombre d'alvéoles sont disposées longitudinalement en parallèle les unes par rapport aux autres avec une paroi d'alvéole entre elles ;
réaliser ensuite un traitement de dégraissage sur ledit corps moulé en nid d'abeille pour fabriquer un corps dégraissé en nid d'abeille ; et
réaliser en outre un traitement de cuisson sur ledit corps dégraissé en nid d'abeille pour fabriquer un corps structuré en nid d'abeille comprenant un corps fritté en carbure de silicium poreux ;
dans lequel ladite composition de matières premières destinée à la fabrication de carbure de silicium comprend : une poudre de silice ; et une poudre de carbone et/ou un polymère source de carbone, une teneur de la poudre de silice dans la composition de matières premières étant de 25 à 70 % en poids, un rapport en poids du carbone sur la silice contenus dans ledit corps dégraissé en nid d'abeille étant de 0,4 à 1,5, et ledit traitement de cuisson étant réalisé à une température comprise entre 1 700 à 2 000°C.

2. Procédé de fabrication d'un corps structuré en nid d'abeille selon la revendication 1,
dans lequel ladite composition de matières premières destinée à la fabrication de carbure de silicium comprend un liant.

3. Procédé de fabrication d'un corps structuré en nid d'abeille selon l'une quelconque de la revendication 1 ou 2,
dans lequel ladite composition de matières premières destinée à la fabrication de carbure de silicium comprend un agent porogène.

4. Procédé de fabrication d'un corps structuré en nid d'abeille selon l'une quelconque des revendications 1 à 3,
dans lequel ladite poudre de silice a un diamètre de particules moyen de 10 à 500 µm.

5. Procédé de fabrication d'un corps structuré en nid d'abeille selon l'une quelconque des revendications 1 à 3,
dans lequel une poudre fine de silice et une poudre grossière de silice qui ont des diamètres de particules moyens différents sont contenues en tant que ladite poudre de silice dans ladite composition de matières premières destinée à la fabrication de carbure de silicium.

6. Procédé de fabrication d'un corps structuré en nid d'abeille selon la revendication 5,
dans lequel ladite poudre fine de silice a un diamètre de particules moyen de 0,1 à 5 µm et ladite poudre grossière de silice a un diamètre de particules moyen de 10 à 500 µm.

7. Procédé de fabrication d'un corps structuré en nid d'abeille selon l'une quelconque des revendications 1 à 6,
dans lequel ladite composition de matières premières destinée à la fabrication de carbure de silicium comprend au moins une poudre de carbone et ladite poudre de carbone a un diamètre de particules moyen de 1 à 40 µm.

8. Procédé de fabrication d'un corps structuré en nid d'abeille selon l'une quelconque des revendications 1 à 7,
dans lequel ladite composition de matières premières destinée à la fabrication de carbure de silicium comprend au moins un polymère source de carbone, et ledit polymère source de carbone comprend au moins un composé choisi dans la groupe consistant en une résine phénolique, une résine copolymère d'acétate de vinyle-éthylène, une résine copolymère de styrène-butadiène, une résine acrylonitrile, une résine styrénique, un polyéthylène, une résine furannique, une résine polyimide et une résine de chlorure de vinyle.

9. Procédé de fabrication d'un corps structuré en nid d'abeille selon l'une quelconque des revendications 1 à 8,
dans lequel ledit corps structuré en nid d'abeille est formé d'un corps fritté en carbure de silicium poreux ou ledit corps structuré en nid d'abeille est formé en combinant une pluralité desdits corps frittés en carbure de silicium poreux les uns avec les autres en intercalant une couche adhésive.
